# EUROPEAN PATENT SPECIFICATION

(11) **EP 3 591 263 B1**
(45) Date of publication and mention of the grant of the patent: **17.11.2021**
(21) Application number: 19185033.8
(22) Date of filing: 08.07.2019
(51) Int. Cl.: F16H 25/24

(54) **ACTUATING DEVICE FOR WINDOW FRAMES AND FOR SHADING FINS**
BETÄTIGUNGSVORRICHTUNG FÜR FENSTERRAHMEN UND BESCHATTUNGSLAMELLEN
DISPOSITIF D'ACTIONNEMENT POUR CADRES DE FENÊTRES ET POUR LAMELLES D'OMBRAGE

(30) Priority: 06.07.2018 IT 201800007014
(43) Date of publication of application: 08.01.2020
(73) Proprietor: Topp Srl a socio unico, 36066 Sandrigo, Vicenza (IT)
(72) Inventor: STEFANOU, Ath. Theodoros, 15771 Athens (GR); CAVALCANTE, Toni, 36031 Vicenza (IT)
(74) Representative: Locas, Davide

(56) References cited:
- EP-A1- 0 482 268
- EP-A1- 2 677 200
- WO-A1-96/01198
- WO-A1-2018/074391

## Description

The present invention relates to an actuation device for shading frames and fins.

The invention results from the need to provide an actuation device for actuatable members which have a high excursion, which is lighter and structurally simple while ensuring equal structural stability.

In particular, the actuation device according to the present invention is particularly intended for automatically actuating windows, skylights and domes in addition to shading fins.

The term "shading fins" is intended to be understood as a series of fins which are substantially rectangular and mutually parallel and which are connected to a frame so as to rotate with respect thereto about mutually parallel rotation axes.

The frame is intended to be fixed to a wall of a building in such a manner that the fins have the respective rotation axes substantially horizontal or vertical.

The fins are rotatable between a closed configuration, in which they are arranged substantially parallel with the wall of the building, and an open configuration, in which they are substantially perpendicular to the wall of the building.

In order to actuate the rotation of the fins, there is provided an actuation device or a plurality thereof which has/have a first end piece which can be fixed to the arrangement of fins, a second end piece which can be fixed to a support which is fixedly joined to the frame or the wall of the building and which is reversibly extensible in order to rotate the fins about the respective rotation axes.

Nowadays, there are known actuation devices for windows and shading fins according to the preamble of claim 1, as e.g. described in WO 96/01198.

In particular, the conventional actuation devices comprise a frame, a rod and an actuator which is configured to move the rod in translation with respect to the frame.

The rod is connected to the frame in a manner sliding in an extension direction between a first position and a second position.

In the first position, the rod is retracted with respect to the frame and, in the second position, it is extended with respect to the frame.

The rod and the frame have corresponding end pieces which are capable of being connected to a series of shading fins in order to actuate them and to a support, respectively.

The frame and the rod are connected by means of a screw and nut linear actuator, which comprises a motor which is fixed to the frame, a nut, which is fixed to an end of the rod, and a screw which is connected coaxially to the nut, and having a first end which is fixed to the rotor of the motor in order to be actuated thereby so as to rotate about the extension direction.

The first end is further supported by a thrust bearing which is fixed to the frame of the actuation device.

The screw extends in the extent direction in order to move the rod in translation in this direction in a reversible manner with respect to the frame.

In the first position, the nut is in a proximal position with respect to the first end of the screw and, following the actuation of the motor in order to extend the rod from the frame, the screw rotates by imparting a translation movement of the nut towards the second end of the screw.

In this manner, the screw is subjected to a compression stress in the extension direction, wherein this stress is applied in the region of the position of the nut and is balanced, as a result of a support reaction in the region of the first end, where the screw is fixed to the rotor.

The spacing between the application cross-section of the stress and the application cross-section of the support reaction thereto increases gradually as the rod is extended from the frame.

The effect arising therefrom, of peak loading acting on the screw, tends to bend the screw.

This bending is undesirable because it tends to cause damage to the nut and/or the thrust bearing and to induce contact between the screw itself and a jacket which encloses it.

Therefore, in order to obtain structural stability of the actuator by preventing any risk of excessive bending of the screw, in these conventional devices the cross-section of the screw is selected in accordance with the excursion to be imparted to the rod.

For example, in order to open and close a skylight or to actuate another device of 80 kg with 1 m of excursion, there is nowadays used an actuator having a screw type element with a core diameter of 18 mm.

If, in order to contain the dimensions and costs, there is used a screw type element having a core diameter which is less, for example, of 6 mm, under conditions of maximum extent, there would be a maximum deflection of 5 cm.

Clearly, in the case of use of such a screw type element with a greater weight to be actuated or intended for a greater excursion or again in the case of a defect of linearity of the screw type element, that is to say, having a bent screw, it is also possible to have a maximum deflection of 10 cm.

This inevitably brings the screw into contact with the framework in which it is contained, bringing about a substantial noise during actuation and rapid degradation of the quality of the screw itself.

WO96/01198 describes a rod type actuator, in which there are provided bearing supports which are capable of supporting an actuating screw of the actuator.

The problem addressed by the present invention is therefore to make the actuation devices for windows and shading fins having a high excursion lighter and more economical, while ensuring the structural stability thereof.

An object of the present invention is to provide an actuation device which is suitable for solving this problem.

In the context of this object, a purpose of the present invention is to provide an actuation device for shading frames and fins which can be carried out in order to obtain small excursions or in order to obtain large excursions by varying a smaller number of components with respect to conventional actuation devices.

Another object of the present invention is to provide an actuation device for shading frames and fins which is quieter with respect to conventional actuation devices.

An additional object of the present invention is to provide an actuation device for shading frames and fins which is more durable, for the same service-life, with respect to conventional actuation devices having the same performance levels.

This purpose and these and other objects which will be better appreciated below are achieved by an actuation device for shading frames and fins according to claim 1.

Secondary characteristics of the actuation device for shading frames and fins according to the present invention are indicated in the dependent claims.

The features and advantages of the invention will be better appreciated from the detailed description of an embodiment thereof which is illustrated by way of non-limiting example in the appended table of drawings, in which:
- Figure 1 is a partial perspective view of an actuation device according to the present invention with some portions being removed in order to better illustrate others;
- Figure 2 is a perspective view of an actuation device according to the invention in a retracted position of the rod;
- Figures 3 to 5 illustrate the actuation device of Figures 1 and 2 in the same positions of the rod between the retracted position and the extended position;
- Figure 6 is a perspective view of the actuation device of Figures 1 and 2, wherein the rod is in an extended position;
- Figure 7 illustrates a detail of the actuation device according to the present invention in relation to a second slider which is viewed as a section along a plane which passes through the extension axis of the rod;
- Figure 8 illustrates a cross-section of the actuation device according to the present invention.

With particular reference to the appended Figures, there is generally designated 10 an actuation device for shading fins which, in a manner which is conventional per se, comprises:
- a frame 11,
- a rod 12 which is connected to the frame 11 in a sliding manner in an extension direction A and
- an actuator 13 which has a motor 14, a screw type element 15 which extends in the extension direction A and a nut element 16 which is connected to the screw type element 15 and which is fixed to a first end 12a of the rod 12.

The motor 14 has a stator which is fixed to the frame 11 and a rotor which is fixed to the screw type element 15, preferably by means of a gear motor, in order to rotate it with respect to the extension direction A in a manner which is known per se and which is not illustrated or further described.

Advantageously, the actuation device 10, in a manner which is conventional per se and which is not illustrated in the appended Figures, comprises a support bearing which is fixed to the frame 11 and to a rotor of the motor 14 or to the screw type element 15 in order to support the static and dynamic stresses which are transmitted from the screw type element 15 during the operation of the actuation device 10 and to prevent such stresses from damaging the motor 14.

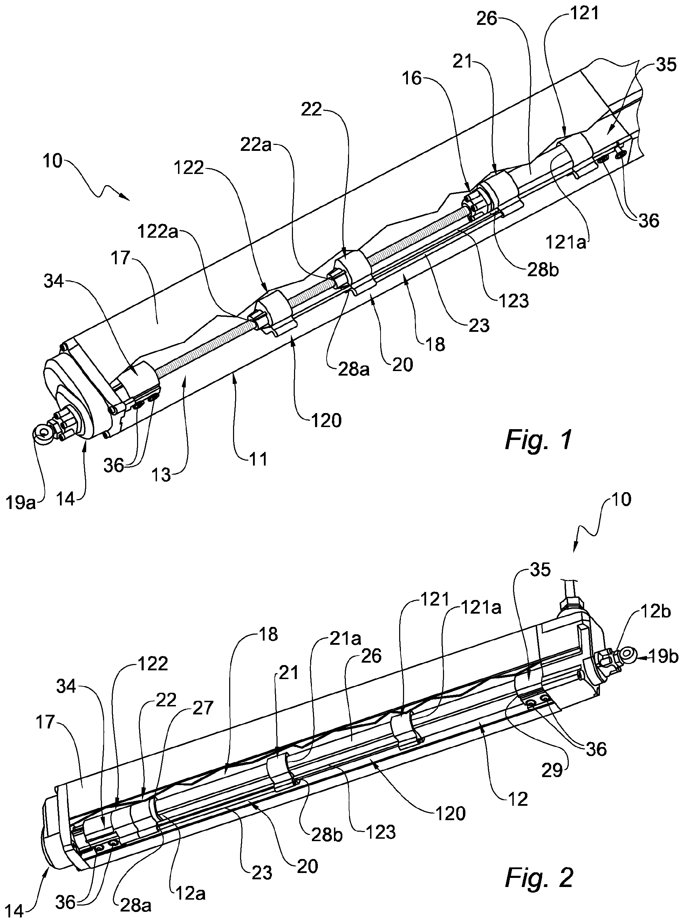

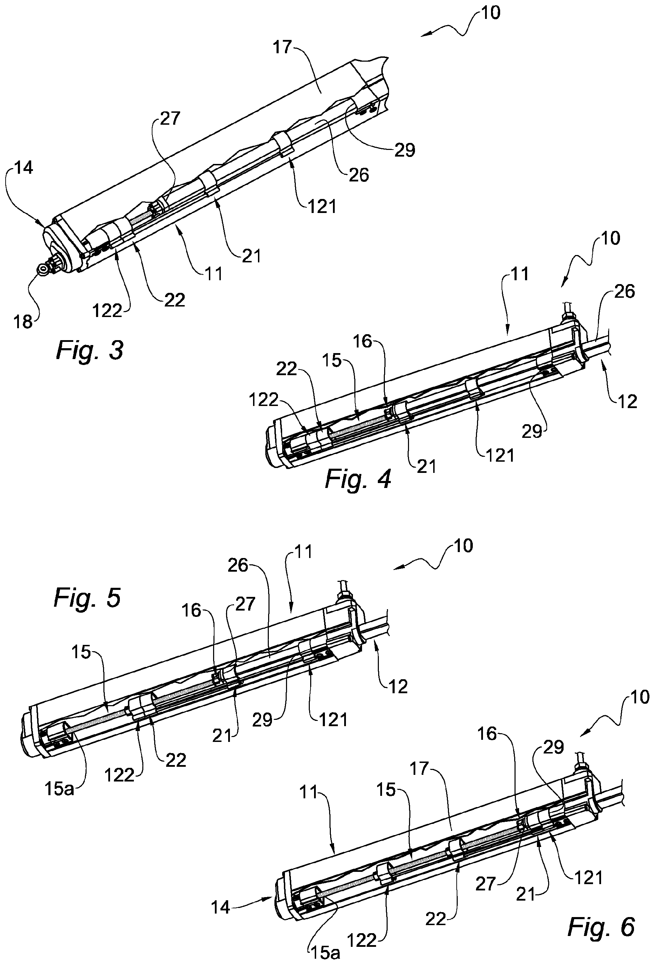

In a manner which is conventional per se, the motor 14 can be actuated reversibly in order to extend the rod 12 with respect to the frame 11 between:
- a retracted position which is schematically indicated in Figure 2 and in which the actuation device has a minimum length in the extension direction A;
- an extended position which is partially visible in the example of Figure 6 and in which the actuation device 10 has a length which is at a maximum in the extension direction A.

With reference to the embodiment illustrated in the appended Figures, the frame 11 has a length in the extension direction A which is at least equal to and generally greater than the length of the rod 12 in the extension direction A.

Furthermore, the frame 11 preferably comprises a framework 17 which defines a housing 18, in which the rod 12 can be received and from which it can be extended in a reciprocating manner.

The rod 12 is preferably received in the housing 18 when it is in the retracted position and it projects therefrom when it is in the extended position.

The actuation device 10 is advantageously provided in a manner which is conventional per se with two fixing end pieces 19a and 19b which are positioned at opposite ends of the actuation device 10 in the extension direction A.

In particular, a first fixing end piece 19a is fixed to the frame 11 and the second fixing end piece 19b is fixed to the rod 12 and in particular to a second end 12b thereof which is opposite the first end 12a with respect to the extension direction A.

The actuation device 10 according to the present invention has a particular characteristic in that it comprises at least one reinforcement member which is preferably configured to counteract the flexion of the screw type element 15, as will be set out in greater detail below.

There is set out merely by way of non-limiting example in the present description and in the appended table of drawings an embodiment of the invention which comprises two reinforcement elements which are designated 20 and 120, respectively.

Clearly, in general, actuation devices according to the invention may be produced with a single reinforcement member or with more than two of them.

Generally, according to the present invention, it will be preferable to use a greater number of reinforcement elements 20, 120 for a decrease in the diameter of the cross-section of the screw type element 15 and/or for an increase in the excursion of the rod 12 and/or the load to be moved.

The term "excursion" is generally intended to be understood to mean the distance travelled by any point of the rod 12 when it moves from the retracted position to the extended position, or vice versa.

According to an aspect of the present invention, the reinforcement element 20, 120 structurally comprises:
- a first slider 21 which has a first seat 21a which is engaged by the rod 12 in a sliding manner in the extension direction A,
- a second slider 22 which has a second seat 22a which is engaged by the screw type element 15 in a sliding manner in the extension direction A.

Preferably, the reinforcement element 20, 120 also comprises a spacer element 23 which is rigidly fixed to the first slider 21 and the second slider 22 in order to maintain them at a predefined spacing.

According to the present invention, the actuation device 10 has a particular characteristic in that it is configured so as to counteract misalignment of the first seat 21a of the first slider 21 with respect to the second seat 22a of the second slider 22.

In a first possible embodiment of the actuation device 10, the reinforcement member 20, 120 is configured so as to counteract misalignment between the first seat 21a and the second seat 22a in order to counteract flexion of the screw type element 15.

A second possible embodiment of the present invention may provide for the function of counteracting misalignment between the first seat 21a and the second seat 22a to be transferred to an interaction between the frame 11 and the sliders 21 and 22 and, preferably, between the framework 17 and the sliders 21 and 22, as explained in greater detail below.

In this case, the frame 11 and preferably the framework 17 will be configured so as to interfere with the first slider 21 and the second slider 22 in order to guide them during sliding in the sliding direction A so as to counteract misalignment between the first seat 21a and the second seat 22a.

Advantageously, an actuation device according to the present invention may be carried out according to a combination of the above-mentioned embodiments.

In the first embodiment, in other words, the reinforcement member 20, 120 is configured to prevent substantial misalignment between the first seat 21a and the second set 22a.

The reinforcement member 20, 120 therefore counteracts any deformations of the screw type element 15 in a transverse direction relative to the extension direction A.

These transverse deformations of the screw type element 15 are in fact promoted by the peak loading which is applied thereto by the rod 12 during the extension thereof, that is to say, during the movement thereof from the retracted position to the extended position.

The reinforcement member 20, 120, being anchored to the rod 12 by means of the first slider 21, tends to maintain the second slider 22 in a coaxial state relative to the extension direction A so as to also keep the screw type element coaxial therewith, at least in the region of the second slider 22.

Generally, the actuation device 10 is configured in such a manner that, if there is provided a single reinforcement member 20, 120, during the extension of the rod 12 the second slider 22 is in an intermediate position between the nut element 16 and a first end 15a of the screw type element 15, in the region of which the screw type element 15 is connected to the motor 14 or the frame 11, in the vicinity thereof.

Advantageously, in this case the actuation device will be configured in such a manner that, when the rod 12 is in the extended position, the second slider 22 is substantially equidistant from the nut element 16 and the first end 15a of the screw type element 15.

If there are provided a number of reinforcement elements 20 and 120, the actuation device will advantageously be configured in such a manner that, in the extended position, the respective second sliders 22 are arranged at substantially regular intervals along the screw type element 15, between the nut element 16 and the first end 15a of the screw type element 15.

In this manner, in an actuation device according to the present invention each reinforcement member produces a movable support for the screw type element.

Particularly during the extension of the actuation device, each reinforcement member allows support for the screw type element in an intermediate position between the nut element which transmits the actuation load of the shading fins and the first end of the screw type element.

This prevents or at least counteracts the flexion of the screw type element which, without any reinforcement member, would tend to bend until it interfered with the framework of the actuation device, in the central portion thereof, that is to say, the portion intermediate between the nut element and the first end of the screw type element.

The presence of the reinforcement member in fact brings about a retention of the central portion in alignment with the extension direction. Where applicable, the peak load applied to the screw type element during the extension of the actuation device will cause less flexion of the free portions of the screw type element with respect to the flexion in the conventional case, without any reinforcement member, so that in the actuation device according to the present invention, the contact of the screw type element with the framework is prevented, greatly reducing the noise of the actuation device itself.

Therefore, the smaller flexion of the screw type element brings about smaller stresses which are transverse with respect to the extension direction on the nut element and on any potential support bearing of the first end of the screw type element, for the benefit of greater durability and reliability of the device according to the present invention.

Advantageously, the second slider 22 comprises guide means which are configured for reducing the friction between the second slider 22 and the screw type element 15.

In greater detail, the second slider 22 preferably comprises an annular member 24 which receives the guide means which alternatively comprise:
- a smooth bush 25 which defines the second seat 22a, wherein the second seat 22a is preferably defined by a cylindrical hole of the smooth bush 25 in engagement with the screw type element 15;
- a nut bush which is in engagement with the screw type element 15 and which is connected to the annular member 24 in a rotatable manner about the extension direction A.

The nut bush is not illustrated and is distinguished from the smooth bush 25 mainly in that it has an internally threaded hole which engages with the thread of the screw type element 15 in order to be coupled to the annular member 24 in a rotatable manner.

In this sense, the second slider 22 preferably comprises a rotation bush, such as, for example, a friction type bearing, or a roller bearing; wherein the nut bush is connected to the annular member 24 by means of the rotation bush or by means of the roller bearing, respectively.

The rod 12 advantageously comprises a tubular member 26 which has an internal cavity which is suitable for receiving the screw type element 15.

The first seat 21a of the first slider 21 preferably has a profile which is complementary to an external cross-section of the tubular member 26 for the sliding of the first slider 21 along the tubular member 26 in the extension direction A.

The profile of the first seat 21a and the external cross-section of the tubular member 26 are preferably configured to counteract the rotation of the first slider 21 on the tubular member 26 in the extension direction A.

For example, the external cross-section of the tubular member 26 and accordingly the profile of the first seat 21a of the first slider 21 may be quadrilateral with curved sides, as in the example illustrated in the appended Figures. More generally, the external cross-section of the first seat and/or of the tubular member will be of a non-circular shape.

In some embodiments, there may be provided a shape coupling between the first seat 21a and the rod 12 so as to counteract rotational movements of the first slider 21 on the tubular member 26 about an axis which is parallel with the extension direction A.

The first end 12a of the rod 12 advantageously comprises a flanged element 27 which defines an abutment for the first slider 21.

The spacer element 23 preferably comprises a bar which extends parallel with the extension direction A from the first slider 21 to the second slider 22 to which it is rigidly fixed.

In the exemplary embodiment of the appended Figures, the spacer element 23 comprises the above-mentioned bar which is advantageously produced from metal material and preferably has a circular cross-section.

In an alternative embodiment of the present invention, which is not illustrated in the appended Figures, the spacer element comprises a tubular element which is coaxial with the extension direction A and which extends between the first slider 21 and the second slider 22, to which it is rigidly fixed.

As in the exemplary embodiment in the appended Figures, in an actuation device 10 there are preferably provided at least two reinforcement elements 20, 120, of which a first reinforcement member 20 has a first length in the extension direction A and a second reinforcement member 120 has a second length in the extension direction A, wherein the second length is greater than the first length.

Advantageously, except for this difference and what is set out below, the two reinforcement elements 20 and 120 are structurally substantially identical and, therefore, the description set out above applies, mutatis mutandis, to each of them, wherein, in the appended Figures and in the following description for the first reinforcement member 20, the reference numerals used above have been used while, for the second reinforcement member 120, the same reference numerals used for the first reinforcement member 20, increased by 100, have been used to identify corresponding details.

According to an aspect of the present invention, the first slider 21 of the first reinforcement member 20 is interposed in the extension direction A between the first end 12a of the rod 12 and the first slider 121 of the second reinforcement member 120.

The second slider 22 of the first reinforcement member 20 is advantageously interposed in the extension direction A between the nut element 16 and the second slider 122 of the second reinforcement member 120.

Preferably, the spacer element 23 of the first reinforcement member 20 has a length equal to a third of the spacing between the nut element 16 and the first end 15a of the screw type element 15 when the rod 12 is in the extended position.

The spacer element 123 of the second reinforcement member 120 advantageously has double the length with respect to the length of the spacer element 23 of the first reinforcement member 20; in this manner, when the rod is in the extended position, the second sliders 22 and 122 will be positioned along the screw type element 15 so as to define three portions of the screw type element 15 having substantially equal lengths.

The first slider 21 and the second slider 22 of the first reinforcement member 20 each comprise a through-hole, which holes are designated 28a, 28b, respectively, in engagement with the spacer element 123 of the second reinforcement member 120 in a sliding manner and guided in the extension direction A.

In the above-mentioned embodiment, in which the spacer elements can be produced by means of tubular elements, advantageously the tubular element of the first reinforcement member is contained inside the tubular element of the second reinforcement member in which it can slide in a telescope-like manner.

The second sliders 22, 122 are advantageously shaped so as to have a male/female interlocking configuration so as to be connected and to move substantially in a fixed manner, unless subjected to a stress which is capable of separating them, as will be better explained below.

The operation of the actuation device according to the present invention in the embodiment illustrated in the appended Figures may be as follows.

When the actuation device 10 is actuated in order to extend the rod 12 from the retracted position (schematically indicated in Figure 2) to the extended position (schematically indicated in Figure 6), as a result of the effect of the rotation of the screw type element 15, the nut element 16 urges the rod 12 so as to extend from the frame 11.

As the flanged element 27 engages with the first slider 21 of the first reinforcement member 20, it is drawn in a manner fixedly joined to the rod while the second reinforcement member 120 remains fixed in position.

The further advance of the rod 12 towards the extension position brings the first slider 21 of the first reinforcement member 20 into contact with the first slider 121 of the second reinforcement member 120 so as to draw it in the extension direction A as far as the lower stop 29 so as to reach the extended position.

In a possible operational alternative, the first and second reinforcement members can move in a fixedly joined manner until they reach the lower stop 29.

In detail, in this case, when the flanged element 27 engages with the first slider 21 of the first reinforcement member 20, it is drawn in a fixedly joined manner with the rod together with the second reinforcement member 120.

In fact, the first reinforcement member 20 is advantageously connected to the second reinforcement member 120 as a result of the effect of the male/female connection between the second sliders 22 and 122, as set out above.

The further advance of the rod 12 towards the extension position brings the first slider 121 of the second reinforcement member 120 into contact with a lower stop 29 which is provided at the opposite end of the frame with respect to the first end 15a of the screw type element 15.

The second sliders 22 and 122 are therefore separated and the first reinforcement member 20 is drawn by the flanged element 27 which is fixedly joined to the rod 12 until the first slider 21 thereof moves into abutment against the first slider 121 of the second reinforcement member 120, the extension position thereby being reached.

Thus, during the movement from the retracted position to the extended position, the second sliders 22 and 122 are arranged in intermediate positions along the length of the screw type element 15, keeping it coaxial with the extension direction A and counteracting the flexion thereof.

During the movement from the extension position to the retracted position, the nut element 16 initially intercepts the second slider 22 of the first reinforcement member 20, causing it then to intercept the second slider 122 of the second reinforcement member 120 until they are brought into a wrapped state in the region of the first end 15a of the screw type element 15.

An actuation device 10, which is constructed in accordance with the above-mentioned second embodiment of the present invention, substantially differs in that the framework 17 is shaped, internally, so as to define a guide seat for the sliding of the first slider 21, 121 and the second slider 22, 122 so that the movement thereof in the extension direction A brings about the substantial coaxiality of the first seat 21a, 121a with the second seat 22a, 122a.

Structurally, the framework 17 has at least one guide element 30, 31, 32 which projects internally with respect to the housing 18 in order to define a guide seat B for the sliders 21, 121, 22, 122.

In this sense, the guide seat B and the external profile of the cross-section of at least one of the sliders 21, 121, 22, 122 will advantageously be mutually complementary. More generally, there will be provided a shape coupling between at least one of the sliders, preferably the second slider 22, which is capable of counteracting mutual rotational movements between the frame 11 and the respective slider.

The housing 18 advantageously comprises guide elements 30, 31 and 32 which extend out internally with respect to the housing 18 and which define a guide seat for the first slider 21 or 121 and the second slider 22 or 122 so as to retain them in a coaxial position relative to the extension direction A.

Advantageously, the framework 17 can be opened in order to be able to carry out maintenance on the actuation device 10.

In particular, the framework 17 preferably has a slit 33 which extends substantially parallel with the extension direction A.

The slit may be closed by a sealing element which is not illustrated and which engages it with interference so as to define a sealing closure.

In this manner, it is possible to remove the sealing element, to carry out cleaning inside the framework 17 or to lubricate the screw type element 15 and to re-position the sealing element.

Advantageously, the actuation device 10 comprises at least one end block 34, 35 and preferably two of them, which is/are capable of delimiting the travel available for the nut element 16 and therefore for the rod 12. Advantageously, the end blocks 34 and 35 are slidable along the framework 17 which encloses the screw type element 15 so as to be able to adjust the position thereof along it.

Advantageously, there are also provided reversible blocking means which can be actuated in order to fix or release the end blocks in such a manner that they can slide or are blocked along the screw type element 15, respectively.

The blocking means preferably comprise screws 36 which engage with corresponding threaded seats of the end blocks 34 and 35 and the framework 17 in such a manner that, by screwing the screws 36, the thrust thereof against the framework 17 produces the blocking of the end blocks 34 and 35 to the framework 17 as loosening the screws 36 produces the unblocking thereof.

There may be provided runners which are interposed between the head of the screws 36 and the framework 17 and which are capable of being urged against it following screwing of the screws 36.

In this manner, in the event of the reinforcement action of the screw type element 15 - resulting from the reinforcement elements 20, 120 - is considered insufficient to prevent excessive deflections of the screw type element 15 under conditions of maximum extent, the actuation device 10 according to the invention allows a limitation on the travel of the rod 12, as a result of the adjustability of the position of the end blocks 34 and 35, and a consequent reduction of the flexion of the screw type element 15.

Advantageously, the framework 17 and the end blocks 34 and 35 are configured in such a manner that the blocking means can be actuated from the outer side of the framework 17 so as to be able to readily adjust the position thereof without substantial disassembly operations being required.

For example, the screws 36 may face the outer side of the framework 17 through the slit 33 when the above-mentioned sealing element is removed.

The slit 33 advantageously has internal edges 33a which are advantageously engaged with the head of the screws 36 directly or via the above-mentioned runners.

Thus, the screws 36 may be readily actuated by means of a screwdriver, via the slit 33, in order to re-position the end blocks 34, 35 along the screw type element 15.

The combination of the presence of the reinforcement elements 20, 120 with that of the end blocks 34 and 35 therefore allows both the use and the purpose of an actuation device according to the present invention to be made particularly flexible, which, by varying the number of the reinforcement elements and the position of the end blocks, will be readily adaptable to a wide range of conditions of use, for covering which nowadays it is necessary to provide different separate actuation models.

Preferably, the framework 17 comprises a profile-member which is advantageously of metal material and which is configured so that the cross-section thereof defines the guide seat B.

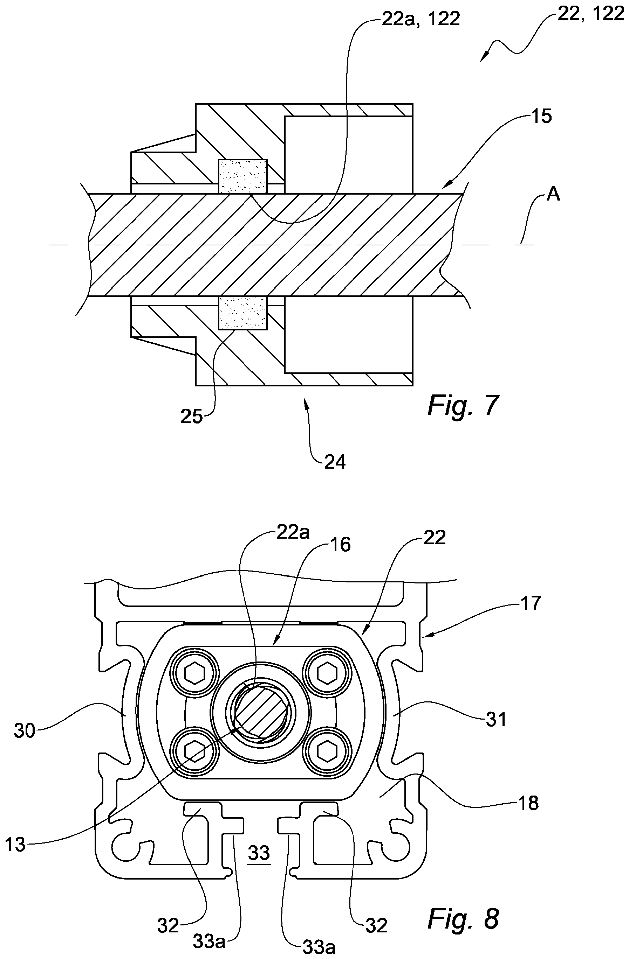

A non-limiting example of this embodiment is illustrated in Figure 8.

Generally, with reference to the example proposed of a load of 80 kg to be actuated over an excursion of 1 m, which, in a conventional actuation device, requires a screw type element with a core diameter no less than 18 mm, in the case of use of an actuation device 10 according to the present invention it allows the use of a screw type element with a core diameter of 6 mm, with the evident advantage of weight and cost of the actuation device with respect to the conventional one.

The present invention thereby achieves the objects proposed, affording the advantages set out in comparison with known solutions.

A main advantage involves the fact that an actuation device according to the invention may be produced with screw type elements having a diameter less than the prior art, while ensuring greater noiselessness of the device and at least identical durability and reliability with respect to actuation devices of the prior art.

Another advantage is that an actuation device according to the present invention is lighter with respect to conventional devices with identical capacity for extension.

Another advantage of an actuation device according to the present invention is that, if an actuation device is provided for use under different working conditions with respect to those of effective use, particularly if the load to be moved is of a greater magnitude, it will simply be necessary to remove the framework 17 and to add an additional reinforcement element 20, 120 so as to increase the stability of the element 15.

Vice versa, if the load effectively intended to be moved is found to be less than the load originally provided for, the number of reinforcement elements may be reduced.

Therefore, an actuation device according to the invention is readily adaptable to different conditions of use in a simple and easy manner.

Furthermore, it allows a reduction of the storage reserves of a manufacturer, an actuation device being readily adaptable for the actuation of loads in a wider range with respect to conventional actuation devices.

Therefore, an actuation device according to the invention allows the use of a screw type element and a nut element having a smaller operating diameter for the same load to be moved, with respect to a conventional actuation device, thereby allowing the production of a greater mechanical output of the actuation device as a result of the reduction of the friction between the screw type element and nut element.

## Claims

1. Actuating device (10) for window frames and for shading fins, the device comprising:
- a frame (11),
- a rod (12) connected to said frame (11) so as to slide in a direction of extension (A), and
- an actuator (13) having a motor (14), a screw element (15) that extends in said direction of extension (A) and a female screw element (16) that is coupled to said screw element (15) and fixed to a first end (12a) of said rod (12), said rod (12) comprising a tubular member (26) which has an internal cavity which is suitable for receiving the screw type element (15);
said motor (14) having a stator fixed to said frame (11) and a rotor fixed to said screw element (15) in order to rotate it about said direction of extension (A);
said actuating device (10) further comprising at least one stiffening member (20, 120) which includes:
- a first slider (21) having a first seat (21a) engaged by said rod (12),
- a second slider (22) having a second seat (22a) slidably engaged by said screw element (15) in said direction of extension (A),
- a spacing element (23) rigidly fixed to said first slider (21) and to said second slider (22) in order to keep said sliders at a predefined distance;
wherein said frame (11) is configured so as to interfere with the first slider (21) and the second slider (22) in order to guide them during sliding in the sliding direction (A) so as to counter misalignment of the first seat (21a) of said first slider (21) relative to the second seat (22a) of said second slider (22), **characterized in that** a shape coupling is provided between said first seat (21a) and said rod (12) so as to counteract rotational movements of said first slider (21) on said tubular member (26) of said rod (12) about an axis which is parallel with the extension direction (A).

2. Actuating device (10) according to claim 1, wherein said first seat (21a) has a section with respect to said extension direction (A)having a non-circular shape.

3. Actuating device (10) according to claim 1 or 2, wherein the first seat (21a) of the first slider (21) has a profile which is complementary to an external section of the tubular member (26) for the sliding of said first slider (21) along said tubular member (26) in said extension direction (A).

4. Actuating device (10) according to any of the preceding claims, wherein said second slider (22) comprises guiding means designed to reduce the friction between said second slider (22) and said screw element (15).

5. Actuating device (10) according to claim 4, wherein said second slider (22) comprises an annular body (24) which houses said guiding means which alternatively comprise:
- a smooth bushing (25) that defines said second seat (22a), wherein said second seat (22a) is defined by a cylindrical hole of said smooth bushing (25), which hole is engaged by the screw element (15);
- a female screw bushing engaged by said screw and rotatably connected to said annular body (24) about said direction of extension (A).

6. Actuating device (10) according to any one of the preceding claims, wherein the first end (12a) of said rod (12) comprises a flange element (27) that defines a contact stop for said first slider (21).

7. Actuating device (10) according to any one of the preceding claims, wherein said spacing element (23) comprises a bar that extends in parallel with said direction of extension (A) from said first slider (21) to said second slider (22), to which sliders said bar is rigidly fixed.

8. Actuating device (10) according to any one of claims 1 to 5, wherein said spacing element (23) comprises a tubular element that is coaxial to said direction of extension (A) and extends between said first slider (21) and said second slider (22), to which sliders said tubular element is rigidly fixed.

9. Actuating device (10) according to any one of the preceding claims, wherein at least two of said stiffening members (20, 120) are provided, of which a first stiffening member (20) has a first length in said direction of extension (A), and a second stiffening member (120) has a second length in said direction of extension (A), wherein said second length is greater than said first length;
wherein the first slider (21) of said first stiffening member (20) is arranged, in said direction of extension (A), between the first end (12a) of said rod (12) and the first slider (121) of said second stiffening member (120);
wherein the second slider (22) of said first stiffening member (20) is arranged, in said direction of extension (A), between said female screw element (16) and the second slider (122) of said second stiffening member (120).

10. Actuating device (10) according to claims 6 or 8, wherein the first and the second slider (22) of said first stiffening member (20) each comprise a through-hole which is engaged by the spacing element (123) of said second stiffening member (120) such that said spacing element can slide and is guided in said direction of extension (A).

11. Actuating device (10) according to claims 8 or 9, wherein the tubular element of said first stiffening member (20) is contained inside the tubular element of said second stiffening member (120), in which it can slide in the manner of a telescope.

12. Actuating device (10) according to any one of the preceding claims, wherein a shape coupling is provided between at least one of the sliders (21, 22), which is capable of counteracting mutual rotational movements between said frame (11) and the respective slider.

13. Actuating device (10) according to any one of the preceding claims, further comprising:
- at least one terminal block (34, 35) that can delimit an available path for said female screw element (14) and is adjustably slidable along a casing (17) that encloses said screw element (15);
- blocking means that can be actuated in order to fix or release said at least one terminal block (34, 35) such that said terminal block can slide or be blocked, respectively, along said casing (17).

## Patentansprüche

1. Betätigungsvorrichtung (10) für Fensterrahmen und für Beschattungslamellen, wobei die Vorrichtung aufweist:
- einen Rahmen (11),
- eine Stange (12), die mit dem Rahmen (11) verbunden ist, um in eine Erstreckungsrichtung (A) zu gleiten, und
- einen Aktuator (13) mit einem Motor (14), einem sich in die Erstreckungsrichtung (A) erstreckenden Schraubenelement (15) und einem weiblichen Schraubenelement (16), das mit dem Schraubenelement (15) gekoppelt und an einem ersten Ende (12a) der Stange (12) befestigt ist,
- wobei die Stange (12) ein rohrförmiges Element (26) aufweist, das einen inneren Hohlraum aufweist, der geeignet ist, das schraubenartige Element (15) aufzunehmen;
- wobei der Motor (14) einen am Rahmen (11) befestigten Stator und einen am Schraubenelement (15) befestigten Rotor aufweist, um es um die Erstreckungsrichtung (A) zu drehen;
- wobei die Betätigungsvorrichtung (10) ferner zumindest ein Versteifungselement (20, 120) aufweist, das umfasst:
- einen ersten Schieber (21) mit einem ersten Sitz (21a), in den die Stange (12) eingreift,
- einen zweiten Schieber (22) mit einem zweiten Sitz (22a), der verschiebbar in das Schraubenelement (15) in die Erstreckungsrichtung (A) eingreift,
- ein Abstandselement (23), das starr am ersten Schieber (21) und zweiten Schieber (22) befestigt ist, um die Schieber in einem vordefinierten Abstand zu halten;
- wobei der Rahmen (11) so eingerichtet ist, um den ersten Schieber (21) und den zweiten Schieber (22) zu beeinträchtigen, um sie während des Gleitens in die Gleitrichtung (A) zu führen, um einer Fehlausrichtung des ersten Sitzes (21a) des ersten Schiebers (21) relativ zum zweiten Sitz (22a) des zweiten Schiebers (22) entgegenzuwirken, **dadurch gekennzeichnet, dass** zwischen dem ersten Sitz (21a) und der Stange (12) eine Formkopplung vorgesehen ist, um Drehbewegungen des ersten Schiebers (21) auf dem rohrförmigen Element (26) der Stange (12) um eine Achse, die parallel zur Erstreckungsrichtung (A) ist, entgegenzuwirken.

2. Betätigungsvorrichtung (10) nach Anspruch 1, wobei der erste Sitz (21a) einen Abschnitt in Bezug auf die Erstreckungsrichtung (A) mit einer nicht kreisförmigen Form aufweist.

3. Betätigungsvorrichtung (10) nach Anspruch 1 oder 2, wobei der erste Sitz (21a) des ersten Schiebers (21) ein Profil aufweist, das komplementär zu einem Außenabschnitt des rohrförmigen Elements (26) zum Gleiten des ersten Schiebers (21) entlang des röhrenförmigen Elements (26) in die Erstreckungsrichtung (A) ist.

4. Betätigungsvorrichtung (10) nach einem der vorhergehenden Ansprüche, wobei der zweite Schieber (22) Führungsmittel aufweist, die dazu bestimmt sind, die Reibung zwischen dem zweiten Schieber (22) und dem Schraubenelement (15) zu reduzieren.

5. Betätigungsvorrichtung (10) nach Anspruch 4, wobei der zweite Schieber (22) einen ringförmigen Körper (24) aufweist, der die Führungsmittel aufnimmt, die alternativ aufweisen:
- eine glatte Buchse (25), die den zweiten Sitz (22a) bildet, wobei der zweite Sitz (22a) durch ein zylindrisches Loch der glatten Buchse (25) gebildet wird, in deren Loch das Schraubenelement (15) eingreift;
- eine Innengewindebuchse, in die die Schraube eingreift und die drehbar mit dem ringförmigen Körper (24) um die Erstreckungsrichtung (A) verbunden ist.

6. Betätigungsvorrichtung (10) nach einem der vorhergehenden Ansprüche, wobei das erste Ende (12a) der Stange (12) ein Flanschelement (27) aufweist, das einen Kontaktanschlag für den ersten Schieber (21) bildet.

7. Betätigungsvorrichtung (10) nach einem der vorhergehenden Ansprüche, wobei das Abstandselement (23) eine Stange aufweist, die sich parallel zur Erstreckungsrichtung (A) vom ersten Schieber (21) zum zweiten Schieber (22) erstreckt, an denen die Stange starr befestigt ist.

8. Betätigungsvorrichtung (10) nach einem der Ansprüche 1 bis 5, wobei das Abstandselement (23) ein rohrförmiges Element aufweist, das koaxial zur Erstreckungsrichtung (A) ist und sich zwischen dem ersten Schieber (21) und zweiten Schieber (22) erstreckt, an denen das röhrenförmige Element starr befestigt ist.

9. Betätigungsvorrichtung (10) nach einem der vorhergehenden Ansprüche, wobei zumindest zwei der Versteifungselemente (20, 120) vorgesehen sind, von denen ein erstes Versteifungselement (20) eine erste Länge in die Erstreckungsrichtung (A) und ein zweites Versteifungselement (120) eine zweite Länge in die Erstreckungsrichtung (A) aufweist, wobei die zweite Länge größer als die erste Länge ist;
- wobei der erste Schieber (21) des ersten Versteifungselements (20) in die Erstreckungsrichtung (A) zwischen dem ersten Ende (12a) der Stange (12) und dem ersten Schieber (121) des zweiten Versteifungselements (120) angeordnet ist;
- wobei der zweite Schieber (22) des ersten Versteifungselements (20) in die Erstreckungsrichtung (A) zwischen dem weiblichen Schraubenelement (16) und dem zweiten Schieber (122) des zweiten Versteifungselements (120) angeordnet ist.

10. Betätigungsvorrichtung (10) nach Anspruch 6 oder 8, wobei der erste und der zweite Schieber (22) des ersten Versteifungselements (20) jeweils ein Durchgangsloch aufweisen, in das das Abstandselement (123) des zweiten Versteifungselements (120) eingreift, so dass das Abstandselement gleiten kann und in die Erstreckungsrichtung (A) geführt wird.

11. Betätigungsvorrichtung (10) nach Anspruch 8 oder 9, wobei das rohrförmige Element des ersten Versteifungselements (20) innerhalb des rohrförmigen Elements des zweiten Versteifungselements (120) enthalten ist, in dem es teleskopartig gleiten kann.

12. Betätigungsvorrichtung (10) nach einem der vorhergehenden Ansprüche, wobei zwischen zumindest einem der Schieber (21, 22) eine Formkopplung vorgesehen ist, die in der Lage ist, gegenseitigen Drehbewegungen zwischen dem Rahmen (11) und dem jeweiligen Schieber entgegenzuwirken.

13. Betätigungsvorrichtung (10) nach einem der vorhergehenden Ansprüche, ferner umfassend:
- zumindest einen Anschlussblock (34, 35), der einen verfügbaren Weg für das weibliche Schraubenelement (14) begrenzen kann und einstellbar entlang eines Gehäuses (17) verschiebbar ist, dass das Schraubenelement (15) umschließt;
- Blockiermittel, die betätigt werden können, um den zumindest einen Anschlussblock (34, 35) so zu fixieren oder zu lösen, dass der Anschlussblock entlang des Gehäuses (17) gleiten oder blockiert werden kann.

## Revendications

1. Dispositif d'actionnement (10) pour cadres de fenêtres et pour lamelles d'ombrage, le dispositif comprenant :
- une structure (11),
- une tige (12) reliée à ladite structure (11) de manière à coulisser dans une direction d'extension (A), et
- un actionneur (13) ayant un moteur (14), un élément à vis (15) qui s'étend dans ladite direction d'extension (A) et un élément à vis femelle (16) qui est couplé audit élément à vis (15) et fixé à une première extrémité (12a) de ladite tige (12), ladite tige (12) comprenant un élément tubulaire (26) qui a une cavité interne qui est adaptée pour recevoir l'élément du type vis (15) ;
ledit moteur (14) ayant un stator fixé à ladite structure (11) et un rotor fixé audit élément à vis (15) afin de le faire tourner autour de ladite direction d'extension (A) ; ledit dispositif d'actionnement (10) comprenant en outre au moins un élément raidisseur (20, 120) qui comporte :
- un premier coulisseau (21) ayant un premier siège (21a) engagé par ladite tige (12),
- un second coulisseau (22) ayant un second siège (22a) engagé de manière coulissante par ledit élément à vis (15) dans ladite direction d'extension (A),
- un élément d'écartement (23) fixé rigidement audit premier coulisseau (21) et audit second coulisseau (22) afin de maintenir lesdits coulisseaux à une distance prédéfinie ;
dans lequel ladite structure (11) est configurée de manière à interférer avec le premier coulisseau (21) et le second coulisseau (22) afin de les guider lors du coulissement dans la direction de coulissement (A) de manière à contrecarrer le désalignement du premier siège (21a) dudit premier coulisseau (21) par rapport au second siège (22a) dudit second coulisseau (22), **caractérisé en ce qu'**un couplage de forme est prévu entre ledit premier siège (21a) et ladite tige (12) de manière à contrecarrer des mouvements de rotation dudit premier coulisseau (21) sur ledit élément tubulaire (26) de ladite tige (12) autour d'un axe qui est parallèle à la direction d'extension (A).

2. Dispositif d'actionnement (10) selon la revendication 1, dans lequel ledit premier siège (21a) a une section par rapport à ladite direction d'extension (A) ayant une forme non circulaire.

3. Dispositif d'actionnement (10) selon la revendication 1 ou 2, dans lequel le premier siège (21a) du premier coulisseau (21) a un profil qui est complémentaire d'une section externe de l'élément tubulaire (26) pour le coulissement dudit premier coulisseau (21) le long dudit élément tubulaire (26) dans ladite direction d'extension (A).

4. Dispositif d'actionnement (10) selon l'une quelconque des revendications précédentes, dans lequel ledit second coulisseau (22) comprend des moyens de guidage conçus pour réduire le frottement entre ledit second coulisseau (22) et ledit élément à vis (15).

5. Dispositif d'actionnement (10) selon la revendication 4, dans lequel ledit second coulisseau (22) comprend un corps annulaire (24) qui loge lesdits moyens de guidage qui comprennent alternativement :
- une douille lisse (25) qui définit ledit second siège (22a), dans lequel ledit second siège (22a) est défini par un trou cylindrique de ladite douille lisse (25), lequel trou est engagé par l'élément à vis (15) ;
- une douille à vis femelle engagée par ladite vis et connectée de manière rotative audit corps annulaire (24) autour de ladite direction d'extension (A).

6. Dispositif d'actionnement (10) selon l'une quelconque des revendications précédentes, dans lequel la première extrémité (12a) de ladite tige (12) comprend un élément de bride (27) qui définit une butée de contact pour ledit premier coulisseau (21).

7. Dispositif d'actionnement (10) selon l'une quelconque des revendications précédentes, dans lequel ledit élément d'écartement (23) comprend une barre qui s'étend parallèlement à ladite direction d'extension (A) dudit premier coulisseau (21) audit second coulisseau (22), auxquels coulisseaux est fixée rigidement ladite barre.

8. Dispositif d'actionnement (10) selon l'une quelconque des revendications 1 à 5, dans lequel ledit élément d'écartement (23) comprend un élément tubulaire qui est coaxial à ladite direction d'extension (A) et s'étend entre ledit premier coulisseau (21) et ledit second coulisseau (22), auxquels coulisseaux est fixé rigidement ledit élément tubulaire.

9. Dispositif d'actionnement (10) selon l'une quelconque des revendications précédentes, dans lequel au moins deux desdits éléments raidisseurs (20, 120) sont prévus, dont un premier élément raidisseur (20) a une première longueur dans ladite direction d'extension (A), et un second élément raidisseur (120) a une seconde longueur dans ladite direction d'extension (A), dans lequel ladite seconde longueur est supérieure à ladite première longueur ;
dans lequel le premier coulisseau (21) dudit premier élément raidisseur (20) est agencé, dans ladite direction d'extension (A), entre la première extrémité (12a) de ladite tige (12) et le premier coulisseau (121) dudit second élément raidisseur (120) ; dans lequel le second coulisseau (22) dudit premier élément raidisseur (20) est agencé, dans ladite direction d'extension (A), entre ledit élément à vis femelle (16) et le second coulisseau (122) dudit second élément raidisseur (120).

10. Dispositif d'actionnement (10) selon les revendications 6 ou 8,
dans lequel les premier et second coulisseaux (22) dudit premier élément raidisseur (20) comprennent chacun un trou traversant qui est engagé par l'élément d'écartement (123) dudit second élément raidisseur (120) de sorte que ledit élément d'écartement puisse coulisser et soit guidé dans ladite direction d'extension (A).

11. Dispositif d'actionnement (10) selon les revendications 8 ou 9, dans lequel l'élément tubulaire dudit premier élément raidisseur (20) est contenu dans l'élément tubulaire dudit second élément raidisseur (120), dans lequel il peut coulisser à la manière d'un télescope.

12. Dispositif d'actionnement (10) selon l'une quelconque des revendications précédentes, dans lequel un couplage de forme est prévu entre au moins l'un des coulisseaux (21, 22), qui est capable de contrecarrer des mouvements de rotation mutuels entre ladite structure (11) et le coulisseau respectif.

13. Dispositif d'actionnement (10) selon l'une quelconque des revendications précédentes, comprenant en outre :
- au moins un bloc de jonction (34, 35) qui peut délimiter un chemin disponible pour ledit élément à vis femelle (14) et qui peut coulisser de manière réglable le long d'un boîtier (17) qui enferme ledit élément à vis (15) ;
- des moyens de blocage pouvant être actionnés pour fixer ou libérer ledit au moins un bloc de jonction (34, 35) de sorte que ledit bloc de jonction puisse respectivement coulisser ou se bloquer le long dudit boîtier (17).
